# EUROPEAN PATENT SPECIFICATION

(11) **EP 2 043 962 B1**
(45) Date of publication and mention of the grant of the patent: **31.10.2018**
(21) Application number: 07796572.1
(22) Date of filing: 29.06.2007
(51) Int. Cl.: C03C 21/00, C03C 23/00, C03C 3/085, C03C 3/087

(54) **METHOD OF MAKING GLASS INCLUDING SURFACE TREATMENT WITH ALUMINUM CHLORIDE AT OR JUST PRIOR TO ANNEALING LEHR**
VERFAHREN ZUR HERSTELLUNG VON GLAS MIT OBERFLÄCHENBEHANDLUNG MIT ALUMINIUMCHLORID AM ODER UNMITTELBAR VOR DEM KÜHLOFEN
PROCÉDÉ DE FABRICATION DE VERRE COMPRENANT UN TRAITEMENT DE SURFACE AVEC DU CHLORURE D'ALUMINIUM AU NIVEAU OU JUSTE AVANT LA GALERIE DE RECUISSON

(30) Priority: 25.07.2006 US 492204
(43) Date of publication of application: 08.04.2009
(73) Proprietor: Guardian Glass, LLC, Auburn Hills MI 48326 (US); Guardian Europe S.à.r.l., 8070 Bertrange (LU)
(72) Inventor: DISTELDORF, Bernd, 66693 Mettlach (DE); LONGOBARDO, Anthony, V., Oak Grove, MI 48863 (US); MCCRYSTAL, Keith, Dearborn, MI 48124 (US)
(74) Representative: Hess, Peter K. G.
(86) International application number: PCT/US2007/015134
(87) International publication number: WO 2008/013647

(56) References cited:
- WO-A-97/29058
- WO-A-2004/096724
- DE-A1-102006 034 431
- GB-A- 852 270
- US-A- 5 782 949
- DATABASE WPI Week 198845 Derwent Publications Ltd., London, GB; AN 1988-321101 XP002469998 & SU 1 392 043 A (GUSEV GLASS RES) 30 April 1988 (1988-04-30)

## Description

This invention relates to a method of making soda-lime-silica based glass. In certain example embodiments of this invention, during the glass-making process, following the stage where the glass sheet is formed and floated on a molten material (e.g., tin bath), a major surface(s) of the glass is treated with aluminum chloride (e.g., AlCl₃) at or just prior to the annealing lehr. The aluminum chloride treatment in a patterned-line process (as opposed to a float process) may also be performed at or just prior to the annealing lehr. The aluminum chloride treatment at or just prior to the annealing lehr, in either a float or patterned line glass making process, is advantageous in that it allows the treatment to be performed at a desirable glass temperature and permits exhaust functions in or proximate the annealing lehr to remove byproducts of the treatment in an efficient manner. Such glasses made in this manner are useful, for example and without limitation, in glass window applications, solar cell applications, furniture glass applications, and/or display glass applications.

### BACKGROUND OF THE INVENTION

In a conventional float line glass-making process, glass batch materials are heated in a furnace or melter to form a glass melt. The glass melt is poured onto a bath of molten material such as tin (tin bath), where the glass melt is formed and continuously cooled to form a float glass ribbon. The float glass ribbon is then forwarded to the annealing lehr for further processing and then may be cut to form solid glass articles, such as flat glass sheets. For float glass, the glass batch often includes soda, lime and silica to form soda-lime-silica based flat glass.

Unfortunately, conventional float glass (coated or uncoated) is susceptible to damage as a result alkalis such as sodium (Na) diffusing outwardly from the glass to the surface and possibly in coatings such as low-E coatings provided on the glass. On uncoated glass, the sodium upon reaching the surface may react with water or the like to produce visible stains or smears on the glass surface. Moreover, sodium diffusion into coatings on the glass can damage the coatings thereby leading to defected coated articles such as IG (insulating glass) window units, or other types of windows.

It is known to treat the surface of glass with materials such as aluminum (e.g., see JP 60-176952, and WO 2004/096724 to Hessenkemper). However, such treatments are not done in an efficient manner consistent with the float process.

Further, WO 2004/096 724 A discloses alkaline glasses with modified surfaces, wherein modified surfaces are stabilized to substantially prevent a sodium reverse diffusion from the volume even at high temperatures, particularly in case of flame reprocessing. WO 97/ 29 058 A relates to a method for treating glass substrates. The method comprises a step of surface ion exchange reinforcement followed by a step of surface de-alkalinisation of the substrate.

Document SU1392043 discloses water emulsions of a polysiloxane comprising as well potassium salt and zinc or aluminum salt.

Document DE102006034431-A1 is about coating of the internal surface of bottles with AlCl3 starting from its solutions in methanol.

Document US5782949 deals with the surface treatment of glasses on the production line by the application of a coating from the gas phase just prior of the annealing lehr.

Document GB852270 describes a process of treating a glass with a mixture of chlorides (among other A1C13).

In view of the above, it will be apparent that there exists a need in the art for a method of making flat glass, e.g., via either the float process or a patterned-line process, including a technique for treating the glass to make it more durable, in a more efficient manner.

### SUMMARY OF EXAMPLE EMBODIMENTS OF THE INVENTION

This need is fulfilled by a method for making a soda-lime silica based glass according to claim 1.

This invention relates to a method of making soda-lime-silica based glass. The glass may be made using either a float process or a patterned-line process in different example embodiments of this invention. In certain example embodiments of this invention, the soda-lime-silica based glass comprises a base glass portion that includes: SiO₂ 67 - 75 %, Na₂O 10 - 20 %, CaO 5 - 15 %, Al₂O₃ 0 - 7 %, MgO 0-7%, and K₂O 0 - 7 %. Optionally, the glass may further include one or more colorants such as iron, selenium, cobalt, erbium and/or the like.

In the present invention, a major surface(s) of the glass is treated with aluminum chloride (e.g., AlCl₃) at or just prior to the annealing lehr. In the float process, the annealing lehr is located after the molten bath (e.g., tin bath), whereas in a patterning-line process the annealing lehr is located after the patterning roller(s) (i.e., the lehr is located soon after the glass forming stage). The aluminum chloride may be used in the form of a mixture including AlCl₃ provided in a solvent comprising methanol. The aluminum chloride treatment at or just prior to the annealing lehr, in either a float or patterned line glass making process, is advantageous in that it allows the treatment to be performed at a desirable glass temperature, takes advantage of the excess oxygen present in the lehr which helps burn off the solvent(s), and permits exhaust functions in or proximate the annealing lehr to remove byproducts of the treatment in an efficient manner. Thus, additional exhaust steps following the lehr may be avoided in certain example non-limiting situations, as may aluminum treatment steps with corresponding heating following the lehr. Such glasses made in this manner are useful, for example and without limitation, in glass window applications, solar cell applications, furniture glass applications, and/or display glass applications.

In this invention there is provided a method of making soda-lime-silica based glass, the method comprising: providing glass raw materials in a furnace to form a glass melt; forwarding a glass strip formed from the melt to an annealing lehr where the glass strip is annealed; and treating at least one major surface of the glass strip with aluminum chloride, at or just prior to the annealing lehr, when the glass strip is at a temperature of from 540 degrees C to 850 degrees C.

For performing the method of the invention an apparatus for making soda-lime-silica based glass is used, the apparatus comprising: a furnace into which glass raw materials are introduced to form a glass melt; an annealing lehr where a glass strip formed from the glass melt is annealed; and means for treating at least one major surface of the glass strip with aluminum chloride, at or just prior to the annealing lehr, when the glass strip is at a temperature of from 580 degrees C to 850 degrees C.

### BRIEF DESCRIPTION OF THE DRAWINGS

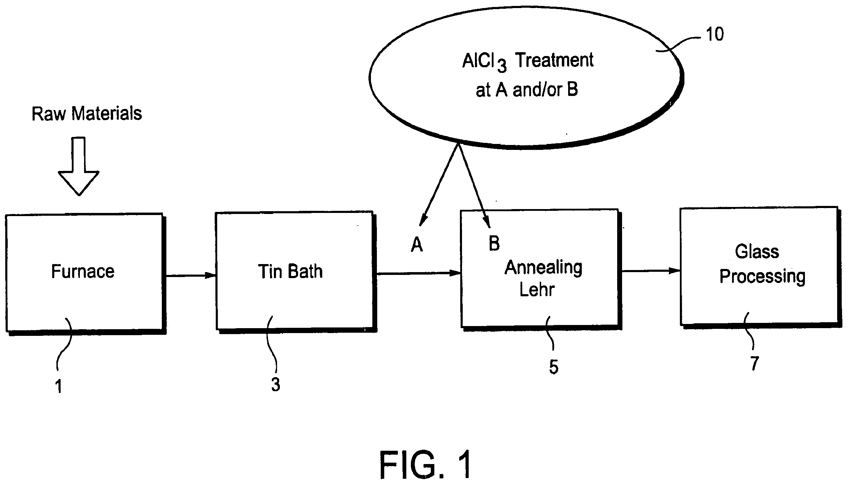

Fig. 1 is a schematic diagram illustrating a glass making process, using the float process, according to an example embodiment of this invention.

### DETAILED DESCRIPTION OF CERTAIN EXAMPLE EMBODIMENTS OF THIS INVENTION

This invention relates to a method of making soda-lime-silica based glass, using one or both of a float process and/or a patterned-line process. In this invention, a major surface(s) of the glass is treated with aluminum chloride (e.g., AlCl₃) at or just prior to the annealing lehr. In the float process, the annealing lehr is located after the molten bath (e.g., tin bath) where the glass floats on the molten bath, whereas in a patterning-line process the annealing lehr is located after the patterning roller(s) which form patterns in one or both major surfaces of the glass (i.e., the lehr is located soon after the glass forming stage). The aluminum chloride treatment at or just prior to the annealing lehr is advantageous in that it allows the treatment to be performed at a desirable glass temperature, takes advantage of the excess oxygen present in the lehr which helps burn off the solvent(s) with which the aluminum chloride is mixed, and permits exhaust functions in or proximate the annealing lehr to remove byproducts of the treatment in an efficient manner. It is noted that the treatment may also be done in another gas atmosphere (e.g., a nitrogen based gas atmosphere). Thus, additional exhaust steps following the lehr may be avoided in certain example non-limiting situations, as may aluminum treatment steps with corresponding heating following the lehr.

An example soda-lime-silica base glass according to certain embodiments of this invention, on a weight percentage basis, includes the following basic ingredients:

**Table 1: Example Base Glass**

| Ingredient | Wt. % |
|---|---|
| SiO₂ | 67 - 75 % |
| Na₂O | 10 - 20% |
| CaO | 5 - 15 % |
| MgO | 0 - 7% |
| Al₂O₃ | 0 - 7% |
| K₂O | 0 - 7% |

Other minor ingredients, including various refining aids, such as salt cake, crystalline water and/or the like may also be included in the base glass. In certain embodiments, for example, glass herein may be made from batch raw materials silica sand, soda ash, dolomite, limestone, with the use of salt cake (SO₃) as a refining agent (or of course boron oxide as discussed above). Reducing and oxidizing agent(s) may also be used in certain instances. In certain instances, soda-lime-silica base glasses herein include by weight from 10-15% Na₂O and from 6-12% CaO. In addition to the base glass materials discussed above, the glass batch and/or final glass may include a colorant portion including material(s) such as iron, erbium, cobalt, selenium and/or the like. In certain example embodiments of this invention, the amount of total iron in the glass may be from 0.05 to 1.2%, more preferably from about 0.3 to 0.8%. In the case of certain clear high transmission glasses, the total iron may be from 0.005 to 0.025%. The total amount of iron present in the glass, and thus in the colorant portion thereof, is expressed herein in terms of Fe₂O₃ in accordance with standard practice. This, however, does not imply that all iron is actually in the form of Fe₂O₃. Likewise, the amount of iron in the ferrous state is reported herein as FeO, even though all ferrous state iron in the glass may not be in the form of FeO.

Fig. 1 is a schematic diagram of a method of making glass using the float process according to an example embodiment of this invention. The glass batch raw materials (e.g., silica sand, soda ash, dolomite, limestone, etc.) are provided in and heated in a furnace or melter 1 to form a glass melt. The glass melt is poured onto a bath of molten material such as tin (tin bath) at stage 3, where the glass melt is formed and continuously cooled to form a float glass ribbon. The float glass ribbon proceeds toward the annealing lehr 5 for slow cooling. Optionally, prior to entering the annealing lehr 5, lateral edge portion(s) of the glass sheet may be trimmed in a hot condition. The glass sheet typically reaches the beginning of the annealing lehr at a temperatures of at least 540 degrees C, more preferably at least 580 degrees, C, with a possible range from 540 (or 580) to 800 degrees C. During the annealing, the temperature of the glass sheet strip is slowly cooled from the annealing point (e.g., from 538-560 degrees C) to a strain point of from 495-560 degrees C, which may be referred to as an annealing range. While these temperature ranges are preferred for annealing, different temperatures may be used in certain instances. The continuous glass sheet may be supported by either rollers or gas during annealing in different embodiments of this invention. After annealing at 5, the continuous glass sheet is moved on for further processing at 7 such as one or more of cutting, cooling, coating and/or the like.

In the present invention, a major surface(s) of the glass (e.g., the upper surface of the glass which is opposite the molten bath) is treated with aluminum chloride (e.g., AlCl₃) at or just prior to the annealing lehr 5. As shown in Fig. 1, in the float process, the annealing lehr 5 is located after the molten bath (e.g., tin bath) 3 where the glass floats on the molten bath. The aluminum chloride treatment 10 at or just prior to the annealing lehr 5 is advantageous in that it allows the treatment 10 to be performed at a desirable glass temperature and permits exhaust functions in or proximate the annealing lehr to remove byproducts of the treatment in an efficient manner. Thus, additional exhaust steps following the lehr may be avoided in certain example non-limiting situations, as may aluminum treatment steps with corresponding heating following the lehr.

In the aluminum chloride treatment 10, AlCl₃ is provided in a solvent comprising methanol. In addition to methanol, ethanol, isopropyl alcohol, water, or the like may be used as a solvent in which the aluminum chloride is provided. For example, the aluminum chloride treatment may be of or include AlCl₃) x 6H₂O or the like in certain example instances. The mixture of AlCl₃) and solvent(s) may be applied to the major surface(s) of the glass in any suitable manner. For example, in certain example embodiments, the mixture of AlCl₃) and solvent(s) may be sprayed by a gas/air burner(s) located above the glass strip toward the major glass surface in order to apply the treatment (e.g., via combustion CVD or CCVD). The mixture of AlCl₃ and solvent(s) may be applied to the burner in either liquid or gas phase. Alternatively, the mixture of AlCl₃) and solvent(s) may be applied to the glass surface during the treatment 10 by spraying in liquid form, or by evaporating it onto the major glass surface(s). In the annealing lehr where excess oxygen is plentiful, the solvent quickly burns off and can be removed via exhaust port(s) of the lehr.

An example purpose of applying the AlCl₃ to the major surface(s) (e.g., top surface) of the glass is to reduce sodium or other alkali leaching from the glass. The AlCl₃ on the surface of the glass creases a chemical reaction between the Cl (from the AlCl₃) and alkali element(s) (e.g., Na and/or K) and/or alkaline earth element(s) (e.g., Ca and/or Mg) in the glass. For example, Na₂O of the glass matrix reacts with Cl₂ from the AlCl₃ to form NaCl (NaCl → Na + Cl), and the oxygen may be removed as an oxychloride or the like; moreover, HCl and/or H₂O can be removed in vapor form. In a similar manner, K₂O of the glass matrix reacts with Cl₂ (from the AlCl₃) to form KCl. As another example, CaO of the glass reacts with Cl₂ (from the AlCl₃) to form CaCl₂. Again, the HCl is burned off and can be removed by exhaust port(s) at or near the lehr. Accordingly, it will be appreciated that treatment of the glass surface with aluminum chloride such as AlCl₃ is an efficient technique for removing or reducing alkali and alkaline earth elements from the surface area of the glass to some depth into the glass, thereby reducing the ability of alkali and/or alkaline earth element(s) to leach out of the glass and stain the surface thereof and/or damage a coating thereon (e.g., during heat treatment such as thermal tempering). Thus, the surface portion of the glass ends up having a lesser amount of alkali and/or alkaline earth elements (and more Al₂O₃ and SiO₂) than does the rest of the glass sheet such as toward the middle of the sheet, thereby improving durability of the glass and improving stain resistance thereof.

Moreover, the aluminum from the aluminum chloride tends to become incorporated into the glass surface area, bonding with elements of the glass matrix. This is advantageous in that when soda from the glass reacts with the Cl it leaves dangling oxygen bonds in the glass matrix, and the aluminum can react with these dangling oxygen bonds thereby strengthening the glass network and improving strength/durability. Si and Al in the glass may also bond through the oxygens in the glass, and may form an albite structure at the surface in certain example instances. Thus, a surface area of the glass is rich in Al and Si, thereby improving strength and durability of the glass.

As noted above, in the aluminum chloride treatment 10, AlCl₃ is provided in a solvent comprising methanol to make up the mixture. The mixture is from 5-10% AlCl₃, with the remainder being made up of solvent.

It has been found that the glass temperature range at which the aluminum chloride treatment is applied is important. In particular, the glass has to be hot enough to accept the treatment and promote good reaction of the aluminum chloride with elements of the glass, but must be cool enough so that corrosive byproducts of the treatment such as HCl do not cause significant damage to the manufacturing components or the glass itself. It has been found that it is desirable to apply the aluminum chloride to the glass surface during treatment 10 when the glass is at a temperature of from 550 degrees C to 850 degrees C, and most preferably from 590 degrees C to 800 degrees C.

In pattern-glass lines, the aluminum chloride treatment 10 is still performed at or just before the annealing lehr for the advantageous reasons discussed herein. However, there is no tin bath in a pattern-line, and instead the glass may be formed by one or more rollers as described in U.S. Patent No. 6,796,146.

## Claims

1. A method of making soda-lime-silica based glass, the method comprising:
providing glass raw materials in a furnace (1) to form a glass melt;
forwarding a glass strip formed from the melt to an annealing lehr (5) where the glass strip is annealed; and
treating at least one major surface of the glass strip with aluminum chloride, at or just prior to the annealing lehr (5), when the glass strip is at a temperature of from 540 degrees C to 850 degrees C,
wherein said treating comprises applying a mixture of AlCl₃ and at least one solvent to the surface of the glass strip, wherein the mixture is from 5-10% aluminum chloride, and wherein
the solvent comprises methanol.

## Patentansprüche

1. Verfahren zur Herstellung von Glas auf Natron-Kalk-Silikat-Basis, wobei das Verfahren umfasst:
Bereitstellen von Glasrohstoffen in einem Ofen (1) zur Bildung einer Glasschmelze;
Weiterleiten eines aus der Schmelze gebildeten Glasstreifens zu einem Glühkühlofen (5) wo der Glasstreifen geglüht wird; und
Behandeln mindestens einer Hauptoberfläche des Glasstreifens mit Aluminiumchlorid bei oder kurz vor dem Glühkühlofen (5), wenn der Glasstreifen eine Temperatur von 540 Grad C bis 850 Grad C hat,
wobei das Behandeln das Aufbringen einer Mischung von AlCl₃ und zumindest ein Lösungsmittel auf die Oberfläche des Glasstreifens umfasst, wobei die Mischung 5-10% Aluminiumchlorid beträgt,
und wobei das Lösungsmittel Methanol umfasst.

## Revendications

1. Procédé de fabrication d'un verre à base de silicate sodo-calcique, le procédé comprenant :
la fourniture de matières premières de verre dans un four (1) pour former un bain de verre ;
l'avancement d'une bande de verre, formée à partir du bain, vers une galerie de recuisson (5) dans laquelle la bande de verre est recuite ; et
le traitement d'au moins une surface principale de la bande de verre avec du chlorure d'aluminium, au niveau de la galerie de recuisson (5) ou juste avant cette dernière, quand la bande de verre se trouve à une température de 540 degrés C à 850 degrés C,
dans lequel ledit traitement comprend l'application d'un mélange d'AlCl₃ et d'au moins un solvant à la surface de la bande de verre, le mélange contenant de 5 à 10 % de chlorure d'aluminium, et
le solvant comprenant du méthanol.
